# EUROPÄISCHE PATENTSCHRIFT

(11) **EP 2 534 031 B1**
(45) Veröffentlichungstag und Bekanntmachung des Hinweises auf die Patenterteilung: **07.12.2016**
(21) Anmeldenummer: 10805418.0
(22) Anmeldetag: 16.12.2010
(51) Int. Cl.: B62D 25/08, E05D 5/02, E05D 5/06, B62D 25/12

(54) **VORDERWAGEN EINES FAHRZEUGS**
FRONT END OF A VEHICLE
AVANT-TRAIN D'UN VÉHICULE

(30) Priorität: 13.02.2010 DE 102010007898
(43) Veröffentlichungstag der Anmeldung: 19.12.2012
(73) Patentinhaber: Volkswagen Aktiengesellschaft, 38440 Wolfsburg (DE)
(72) Erfinder: BÖSCHE, Thorben, 38446 Wolfsburg (DE)
(86) Internationale Anmeldenummer: PCT/EP2010/007651
(87) Internationale Veröffentlichungsnummer: WO 2011/098110

(56) Entgegenhaltungen:
- DE-A1-102004 001 702
- DE-A1-102004 011 334
- JP-A- 2002 120 762

## Beschreibung

Die Erfindung betrifft einen Vorderwagen eines Fahrzeugs, insbesondere Kraftfahrzeugs, mit zwei in Fahrzeugquerrichtung gesehen gegenüberliegend angeordneten oberen Längsträgern, die ihrerseits jeweils überwiegend durch ein langgestrecktes Kastenprofil gebildet sind, und mit einer Frontklappe, welche mittels den oberen Längsträgern zugeordneter Frontklappenscharniere, die wiederum jeweils ein oberes und ein unteres Scharnierteil aufweisen, an den Längsträgern schwenkbar abgestützt sind.

Derartige Vorderwagen sind seit langem in den unterschiedlichsten Ausführungsformen bekannt. So ist aus der EP 1 205 366 A1 ein Vorderwagen eines Kraftfahrzeugs mit Scharnieren für eine Frontkiappe bekannt, deren unteres Scharnierteil auf einer oberen Wandung eines Längsträgers, der seinerseits im Querschnitt ein gestuftes kastenförmiges Hohlprofil ausbildet, angeordnet und mit der besagten oberen Wandung verschraubt ist, wodurch erweiterter Bauraum oberhalb des Längsträgers erforderlich wird. Aus der EP 0 185 246 A2 ist weiterhin ein Heck- oder Frontklappenscharnier eines Personenkraftwagens bekannt, welches eine Schwenklagerplatte aufweist, an der die Front- oder Heckklappe angebracht ist und die unter Vermittlung eines Schwenkgetriebes in einer Führungsschiene in Fahrzeuglängsrichtung verschiebbar ist. Besagte Führungsschiene ist vorliegend am Boden einer seitlichen Wasserablaufrinne festgelegt, wodurch der bestimmungsgemäße Ablauf von Wasser behindert ist. Ferner besteht für ein derartiges Heck- oder Frontklappenscharnier erhöhter Bauraumbedarf. Die DE 10 2004 011 334 B4 beschreibt des Weiteren einen Vorderbau für ein Kraftfahrzeug mit einem Haubenscharnier, welches mittels eines unteren Scharnierteils sowohl mit einer oberen Wandung eines Längsträgers mit kastenförmigen Profilquerschnitt oder mit einem nach Fahrzeug-innen abgestellten Flansch desselben als auch mit einem Kotflügel verschraubt ist. Aus der DE 44 17 380 C2 ist es bekannt, ein unteres und nach Fahrzeug-Innen ragendes Scharnierteil eines Haubenrespektive Klappenscharniers mit einem Befestigungswinkel auszubilden, der seinerseits von Fahrzeug-Innen gegen einen im Querschnitt kastenförmig ausgebildeten Längsträger gesetzt und mit einer oberen Wandung und einer nach Fahrzeug-Innen weisenden Seitenwandung desselben verschraubt ist. Fernerhin ist es aus der DE 199 42 731 A1 bekannt, seitlich außen eines Längsträgerprofils einen Scharnierträger mit einer vertikalen Führung für ein Haubenscharnier vorzusehen, um bzgl. eines angestrebten erhöhten Fußgängerschutzes bei einem Aufprall, beispielsweise eines Kopfes eines Fußgängers auf die Haube, ein Ausweichen des Haubenscharniers nach unten infolge Brechens eines vordefinierten Versagenselementes zu gestatten. Eine derartige kompliziert gestaltete und aufwendige Anordnung erfordert insbesondere erweiterten Bauraum zwischen dem Längsträgerprofil und einem benachbarten Kotflügel. Weiterhin ist aus der DE 10 2004 001 702 B4 ein Vorderbau für ein Kraftfahrzeug mit einer schwenkbar gelagerten Haube bekannt, deren Haubenscharniere jeweils ein unteres Scharnierteil aufweisen, das in eine Ausnehmung einer oberen Wandung eines Längsträgers hineinragt und mittels eines relativ weit ausladenden und demgemäß erweiterten Bauraum benötigenden U-förmigen Halteteils an der Außenseite des Längsträgers befestigt ist. Im Bereich der Ausnehmung hat der Längsträger zur Verstärkung desselben und des Randes der Ausnehmung einen Einsatz mit einem in die Ausnehmung hineinragenden Rand. Der Einsatz ist an der Innenseite an zwei Seitenwänden des Längsträgers befestigt. Hierfür hat der Einsatz eine Abwinkelung. Im Hinblick auf den oben bereits angestrebten Fußgängerschutz ist es schließlich aus der EP 1 205 366 A1 und der DE 10 2004 011 334 B4 bekannt, das untere Scharnierteil ais verformungsteil auszubilden, welches bei einem Aufprall beispielsweise eines Fußgängers auf die Haube energieabsorbierend ausweicht bzw. sich verformt.

Vor diesem Hintergrund liegt der Erfindung die Aufgabe zugrunde, einen Vorderwagen der gattungsgemäßen Art zu schaffen, der eine alternative Schwenklagerung einer Frontklappe mittels Frontklappenscharniere aufweist, welche insbesondere unter Vermeidung einer Schwächung der oberen, besagte Frontklappenscharniere tragenden Längsträger einfach und kostengünstig zu bewerkstelligen ist sowie geringstmöglichen Bauraum erfordert.

Ausgehend von einem Vorderwagen eines Fahrzeugs, insbesondere Kraftfahrzeugs, mit zwei in Fahrzeugquerrichtung gesehen gegenüberliegend angeordneten oberen Längsträgern, die ihrerseits jeweils überwiegend durch ein langgestrecktes Kastenprofil gebildet sind, und mit einer Frontklappe, welche mittels den oberen Längsträgern zugeordneter Frontklappenscharniere, die wiederum jeweils ein oberes und ein unteres Scharnierteil aufweisen, an den Längsträgern schwenkbar abgestützt sind, wird die gestellte Aufgabe dadurch gelöst, dass das untere Scharnierteil eines jeden Frontklappenscharniers durch eine Ausnehmung in einer oberen Wandung des Kastenprofils des zugeordneten Längsträgers hindurch in den gebildeten Hohlraum des Kastenprofils hineinragt und über ein Profilelement mittelbar an der Innenkontur einer Seitenwandung des Kastenprofils des oberen Längsträgers abgestützt und befestigt ist.

Durch diese Maßnahme ist im Unterschied zum Stand der Technik die Anbindung des unteren Scharnierteils des Frontklappenscharniers an den dasselbe tragenden oberen Längsträger vorteilhaft in den vom Längsträger umschlossenen Raum verlegt, woraus insbesondere Einsparungen an Bauraum zu verzeichnen sind. Des Weiteren ist durch besagtes Profilelement eine zusätzliche Versteifung des Längsträgers bewirkt, woraus im Crashfall, insbesondere im Falle eines Frontalcrashes, ein ungestörter Kraftfluss in der oberen Crash- bzw. Lastebene des Fahrzeugs resultiert.

Die Unteransprüche beschreiben bevorzugte Weiterbildungen oder Ausgestaltungen der Erfindung.

Danach kann das Profilelement stoffschlüssig, insbesondere durch Schweißung, an der Innenkontur der Seitenwandung des Kastenprofils befestigt sein, wodurch eine Schwächung des Längsträgerprofils vermieden ist. Weiter kann das Profilelement an der Innenkontur der der Fahrzeugmitte nächstliegenden Seitenwandung des Kastenprofils befestigt sein, welches sich insbesondere dann als vorteilhaft erweist, wenn in der Ebene dieser Seitenwandung ein nach innen abgestellter, den Längsträger weiter versteifender Flanschverlauf desselben vorgesehen ist, der seinerseits unter Vermeidung einer Unterbrechung desselben, wie es herkömmlich bei seitlicher Anbindung eines Scharniers ausgeführt wird, eine optimale Krafteinleitung in die obere Crash- / Lastebene gestattet. In der Kombination mit besagtem Profilelement ist im Anbindungsbereich des Frontklappenscharniers an den oberen Längsträger somit eine besonders hohe Steifigkeit des Längsträgers bewirkt. Als zweckmäßig hat sich weiterhin ein Profilelement erwiesen, welches im Querschnitt topfförmig mit abgestellten Befestigungsflanschen ausgebildet ist, wobei der Profilboden des Profilelementes zur lösbaren Befestigung des unteren Scharnierteils des Frontklappenscharniers zumindest eine Durchgangsbohrung zur Aufnahme eines mechanischen Befestigungselementes, wie einer Befestigungsschraube, aufweist. Ein derartiges Profilelement kann bevorzugt als Blechformteil ausgebildet sein, welches sich einfach und kostengünstig nach einem an sich bekannten Biege-Stanz-Verfahren herstellen lässt. Weiter kann die zumindest eine Durchgangsbohrung als Langloch ausgebildet sein, wodurch vorteilhaft eine Höheneinstellbarkeit des Frontklappenscharniers gestattet ist. Wie die Erfindung noch vorsieht, kann die Ausnehmung in der oberen Wandung des Kastenprofils des Längsträgers von einem umlaufenden und nach Profil-Innen abgestellten Verstärkungsflansch begrenzt sein, wodurch die an sich durch die Ausnehmung bewirkte Schwächung des Längsträgers einfach und kostengünstig sowie ohne zusätzliche Bauteile weitestgehend wieder aufgehoben ist. Ebenso kann es angezeigt sein, dass untere Scharnierteil mit zumindest einer Sollknickstelle auszubilden, die es gestattet, dass bei erhöhter Stoßbelastung der Frontklappe von oben infolge eines Crashereignisses, wie eines Zusammenstoßes mit einem Fußgänger, das untere Scharnierteil-Stoßenergie absorbierend in Fahrzeugquerrichtung abknickt. In diesem Fall bietet es sich an, die Ausnehmung in der oberen Wandung des Kastenprofils des oberen Längsträgers derart zu dimensionieren, dass das untere Scharnierteil bei weiter erhöhter Knickbeanspruchung in die Ausnehmung zumindest abschnittsweise eindringt und/oder sich auf einem in Grenzen nachgiebig ausgebildeten Randbereich der Ausnehmung, weitere Stoßenergie absorbierend, abstützt. Durch diese vorteilhafte Maßnahme ist das Stoßenergie-Absorptionsverhalten des Frontklappenscharniers möglichst schonend für den Fußgänger in weiten Grenzen einstellbar, indem neben dem unteren Scharnierteil ggf. auch der Längsträger an sich in den Energieabbau mit einbezogen wird. Insoweit kann der besagte Randbereich z. B. eine oder mehrere nachgiebige Aufstandsflächen aufweisen, auf denen sich das abknickende Scharnierteil abstützt. Gemäß einer bevorzugten Ausgestaltungsform kann das untere Scharnierteil im Querschnitt S-förmig ausgebildet sein, wodurch zum einen eine komfortable Montage desselben gestattet ist und zum anderen das Abknickverhalten im besagten Crashfall definiert einstellbar ist.

Die Erfindung wird nachstehend anhand eines in den Zeichnungen schematisch dargestellten Ausführungsbeispieles näher erläutert. Es zeigen:
- Fig. 1: eine perspektivische Ansicht auf den linken Bereich eines erfindungsgemäß ausgebildeten Vorderwagens eines Kraftfahrzeugs, und
- Fig. 2: den Schnitt I-I nach Fig. 1.

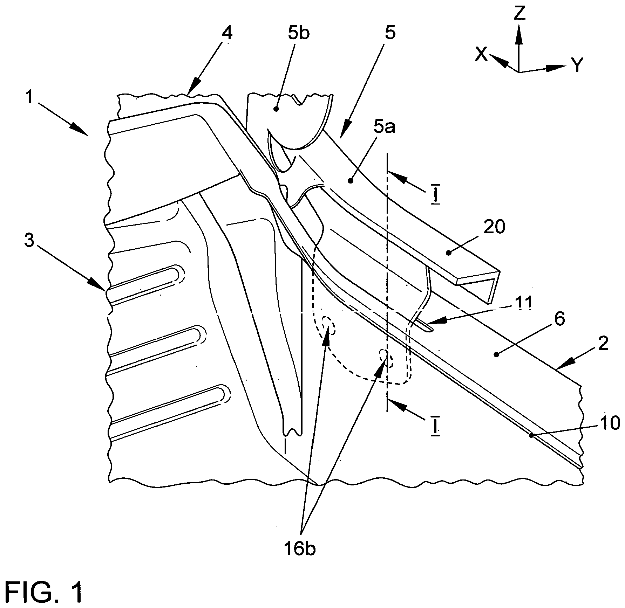

Fig. 1 zeigt den linken Bereich eines Vorderwagens 1 eines Kraftfahrzeugs mit einem oberen Längsträger 2, der seinerseits zur Fahrgastzelle hin an eine Stirnwand 3 der Fahrgastzelle und an eine A-Säule 4 angeschlossen ist. Am besagten oberen Längsträger 2 ist ein Frontklappenscharnier 5 befestigt, welches ein unteres Scharnierteil 5a zur Anbindung an den oberen Längsträger 2 und ein oberes Scharnierteil 5b zur Anbindung an eine hier nicht näher dargestellte, jedoch an sich bekannte Frontklappe aufweist. Unteres und oberes Scharnierteil 5a, 5b sind bekanntermaßen untereinander gelenkig verbunden und stützen besagte Frontklappe auf dem oberen Längsträger 2 schwenkbar ab (nicht näher dargestellt).

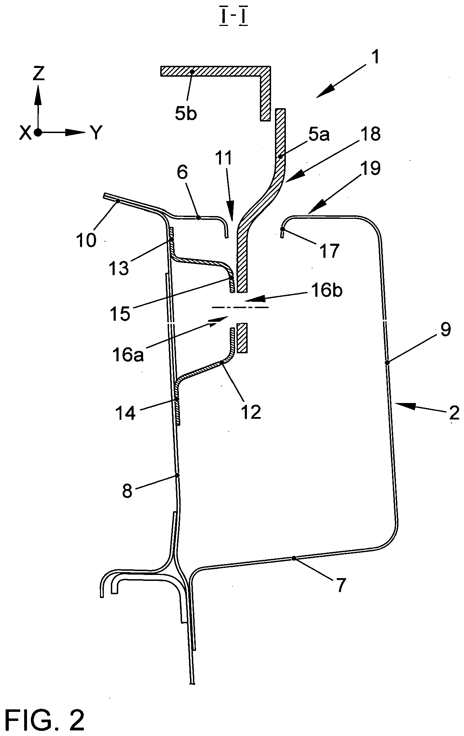

Wie insbesondere der Fig. 2 entnehmbar ist, ist der obere Längsträger 2 durch ein aus zwei Schalenelementen gebautes Kastenprofil mit einer oberen und einer unteren Wandung 6, 7 sowie mit zwei Seitenwandungen 8, 9 gebildet. An die obere Wandung 6 schließt sich in Fahrzeugquerrichtung (Y-Richtung) gesehen nach Fahrzeug-Innen ein abgestellter Flansch 10 an, der sich seinerseits über die gesamte Länge des oberen Längsträgers 2 erstreckt und im Crashfall, insbesondere während eines Frontalcrashes, eine optimale Krafteinleitung in die sogenannte obere Crashebene respektive Lastebene gestattet.

Wie den Fig. 1 und 2 weiter zu entnehmen ist, ragt das untere Scharnierteil 5a durch eine Ausnehmung 11 in der oberen Wandung 6 des oberen Längsträgers 2 hindurch in den gebildeten Hohlraum des Kastenprofils des oberen Längsträgers 2 und ist über ein Profilelement 12 mittelbar an der Innenkontur einer Seitenwandung 8, vorliegend an der der Fahrzeugmitte nächstliegenden Seitenwandung 8 abgestützt und befestigt.

Besagtes Profilelement 12 ist vorliegend im Querschnitt topf- respektive U-förmig mit abgestellten Befestigungsflanschen 13, 14 ausgebildet. Um den oberen Längsträger 2 so wenig wie möglich in seiner Struktur zu schwächen, ist das Profilelement 12 bevorzugt stoffschlüssig, beispielsweise durch Schweißung an der Innenkontur der Seitenwandung 8 des Kastenprofils des oberen Längsträgers 2 festgelegt.

Der Profilboden 15 des Profilelementes 12 ragt in den durch das Kastenprofil des oberen Längsträgers 2 gebildeten Hohlraum hinein und verfügt zur lösbaren Befestigung des unteren Scharnierteils 5a des Frontklappenscharniers 5 am Profilelement 12 über zumindest eine, vorliegend zwei Durchgangsbohrungen 16a zur Aufnahme je eines hier nicht näher dargestellten, jedoch an sich bekannten mechanischen Befestigungsmittels, wie einer Befestigungsschraube. Die Durchgangsbohrungen 16a des Profilelementes 12 korrespondieren dabei jeweils mit einer Durchgangsbohrung 16b des unteren Scharnierteils 5a des Frontklappenscharniers 5.

Die Durchgangsbohrungen 16a des Profilelementes 12 sind ihrerseits als in Fahrzeughochrichtung (Z- Richtung) sich erstreckende Langlöcher ausgebildet, um eine Höheneinstellbarkeit des Frontklappenscharniers 5 mit einfachen und kostengünstigen Mitteln zu gestatten. Demgegenüber kann es jedoch auch angezeigt sein, statt am Profilboden 15 des Profilelementes 12 gleichwirkend am unteren Scharnierteil 5a die Durchgangsbohrungen 16b als derartige Langlöcher auszubilden, welches durch die Erfindung demgemäß mit erfasst ist (nicht näher dargestellt).

Wie bereits oben ausgeführt, bietet es sich an, besagtes Profilelement 12 als Blechformteil auszubilden, welches sich einfach und kostengünstig nach einem an sich bekannten Biege-Stanz-Verfahren herstellen lässt.

Um die durch die Ausnehmung 11 in der oberen Wandung 6 des oberen Längsträgers 2 an sich bewirkte Schwächung des oberen Längsträgers 2 einfach und kostengünstig sowie ohne zusätzliche Bauteile wieder aufzuheben, ist dieselbe von einem einstückig mit der oberen Wandung 6 ausgebildeten umlaufenden und nach Profil-Innen abgestellten Verstärkungsflansch 17 begrenzt.

Aus der Praxis ist es bekannt, dass gerade während eines etwaigen Zusammenstoßes des Fahrzeuges mit einem Fußgänger, derselbe mit dem Kopf auf der Frontklappe aufschlagen kann und erhebliche Körperschäden erleiden kann. Um dieselben zu verhindern, zumindest jedoch weitestmöglich zu minimieren, weist der Querschnitt des unteren Scharnierteils 5a zumindest eine Sollknickstelle 18 auf, die es gestattet, dass bei erhöhter Stoßbelastung der Frontklappe von oben infolge eines Crashereignisses, wie eines Zusammenstoßes mit einem Fußgänger, das untere Scharnierteil 5a Stoßenergie absorbierend in Fahrzeugquerrichtung abknickt.

Vorliegend ist besagte Sollknickstelle 18 allein durch einen gewählten S-förmigen Querschnitt des unteren Scharnierteils 5a bewirkt, indem bei Belastung von oben infolge Hebelwirkung das untere Scharnierteil 5a im Bereich der gebildeten S-Kurve seitlich, d. h., in Fahrzeugquerrichtung (Y-Richtung) gesehen nach Fahrzeug-außen abknickt und dadurch Stoßenergie schonend für den betroffenen Fußgänger absorbiert.

Im Hinblick darauf kann dabei die Ausnehmung 11 der oberen Wandung 6 ferner derart dimensioniert sein, dass das untere Scharnierteil 5a bei weiter erhöhter Knickbeanspruchung in die Ausnehmung 11 zumindest abschnittsweise eindringt und/oder sich auf einem in Grenzen nachgiebig ausgebildeten Randbereich 19 der Ausnehmung 11, weitere Stoßenergie absorbierend, abstützt (nicht näher dargestellt). Hierdurch ist das Stoßenergie-Absorptionsverhalten des Frontklappenscharniers 5 möglichst schonend für den Fußgänger in weiten Grenzen einstellbar, indem neben dem unteren Scharnierteil 5a ggf. auch der obere Längsträger 2 in den Energieabbau mit einbezogen wird, und indem der besagte Randbereich 19 z.B. eine oder mehrere nachgiebige, hier nicht näher dargestellte Aufstandsflächen ausbildet, auf denen sich das abknickende untere Scharnierteil 5a abstützt. Derartige nachgiebige Aufstandsflächen können beispielsweise durch Materialausdünnung, Schlitze und/oder dgl. mehr bereitgestellt werden.

Um das Eindringen des unteren Scharnierteils 5a in die Ausnehmung 11 zu begrenzen und die Funktionsfähigkeit des Frontklappenscharniers 5 auch nach dem besagten Crashereignis, d. h., ein Öffnen der Frontklappe grundsätzlich zu gewährleisten, verfügt das untere Scharnierteil 5a, wie in Fig. 1 gezeigt, über einen Stützabschnitt 20, der gemäß der vorliegend dargestellten Ausführungsform einstückig mit dem unteren Scharnierteil 5a ausgebildet ist. Selbstverständlich ist auch ein als Anbauteil ausgebildeter Stützabschnitt 20 durch die Erfindung mit erfasst.

### Bezugszeichenliste

- 1: Vorderwagen
- 2: Längsträger
- 3: Stirnwand
- 4: A-Säule
- 5: Frontklappenscharnier
- 5a: unteres Scharnierteil
- 5b: oberes Scharnierteil
- 6: obere Wandung (Längsträger 2)
- 7: untere Wandung (Längsträger 2)
- 8: Seitenwandung (Längsträger 2)
- 9: Seitenwandung (Längsträger 2)
- 10: Flansch (Längsträger 2)
- 11: Ausnehmung
- 12: Profilelement
- 13: Befestigungsflansch (Profilelement 12)
- 14: Befestigungsflansch (Profilelement 12)
- 15: Profilboden (Profilelement 12)
- 16a: Durchgangsbohrung (Profilelement 12)
- 16b: Durchgangsbohrung (unteres Scharnierteil 5a)
- 17: Verstärkungsflansch
- 18: Sollknickstelle
- 19: Randbereich (Ausnehmung 11)
- 20: Stützabschnitt (unteres Scharnierteil 5a)

## Patentansprüche

1. Vorderwagen (1) eines Fahrzeugs, insbesondere Kraftfahrzeugs, mit zwei in Fahrzeugquerrichtung gesehen gegenüberliegend angeordneten oberen Längsträgern (2), die ihrerseits jeweils überwiegend durch ein langgestrecktes Kastenprofil gebildet sind, und mit einer Frontklappe, welche mittels den oberen Längsträgern (2) zugeordneter Frontklappenscharniere (5), die wiederum jeweils ein oberes und ein unteres Scharnierteil (5a, 5b) aufweisen, an den Längsträgern (2) schwenkbar abgestützt sind, wobei das untere Scharnierteil (5a) eines jeden Frontklappenscharniers (5) durch eine Ausnehmung (11) in einer oberen Wandung (6) des Kastenprofils des zugeordneten Längsträgers (2) hindurch in den gebildeten Hohlraum des Kastenprofils hineinragt, **dadurch gekennzeichnet, dass** das untere Scharnierteil über ein Profilelement (12) mittelbar an der Innenkontur einer Seitenwandung (8) des Kastenprofils des oberen Längsträgers (2) abgestützt und befestigt ist.

2. Vorderwagen (1) nach Anspruch 1, **dadurch gekennzeichnet, dass** das Profilelement (12) stoffschlüssig, insbesondere durch Schweißung, an der Innenkontur der Seitenwandung (8) des Kastenprofils befestigt ist.

3. Vorderwagen (1) nach Anspruch 1 oder 2, **dadurch gekennzeichnet, dass** das Profilelement (12) an der Innenkontur der der Fahrzeugmitte nächstliegenden Seitenwandung (8) des Kastenprofils befestigt ist.

4. Vorderwagen (1) nach einem der Ansprüche 1 bis 3, **dadurch gekennzeichnet, dass** das Profilelement (12) im Querschnitt topfförmig mit abgestellten Befestigungsflanschen (13) ausgebildet ist, wobei der Profilboden (15) des Profilelementes (12) zur lösbaren Befestigung des unteren Scharnierteils (5a) des Frontklappenscharniers (5) zumindest eine Durchgangsbohrung (16) zur Aufnahme eines mechanischen Befestigungselementes, wie einer Befestigungsschraube, aufweist.

5. Vorderwagen (1) nach Anspruch 4, **dadurch gekennzeichnet, dass** die zumindest eine Durchgangsbohrung (16), eine Höheneinstellbarkeit des Frontklappenscharniers (5) gestattend, als Langloch ausgebildet ist.

6. Vorderwagen (1) nach einem der Ansprüche 1 bis 5, **dadurch gekennzeichnet, dass** das Profilelement (12) als Blechformteil ausgebildet ist.

7. Vorderwagen (1) nach einem der Ansprüche 1 bis 6, **dadurch gekennzeichnet, dass** die Ausnehmung (11) in der oberen Wandung (6) des Kastenprofils des Längsträgers (2) von einem umlaufenden und nach Profil-Innen abgestellten Verstärkungsflansch (17) begrenzt ist.

8. Vorderwagen (1) nach einem der Ansprüche 1 bis 7, **dadurch gekennzeichnet, dass** der Querschnitt des unteren Scharnierteils (5a) zumindest eine Sollknickstelle (18) aufweist, die es gestattet, dass bei erhöhter Stoßbelastung der Frontklappe von oben infolge eines Crashereignisses, wie eines Zusammenstoßes mit einem Fußgänger, das untere Scharnierteil (5a) Stoßenergie absorbierend in Fahrzeugquerrichtung abknickt.

9. Vorderwagen (1) nach Anspruch 8, **dadurch gekennzeichnet, dass** die Ausnehmung (11) in der oberen Wandung (6) des Kastenprofils des oberen Längsträgers (2) derart dimensioniert ist, dass das untere Scharnierteil (5a) bei weiter erhöhter Knickbeanspruchung in die Ausnehmung (11) zumindest abschnittsweise eindringt und/oder sich auf einem in Grenzen nachgiebig ausgebildeten Randbereich (19) der Ausnehmung (11), weitere Stoßenergie absorbierend, abstützt.

10. Vorderwagen (1) nach einem der Ansprüche 1 bis 9, **dadurch gekennzeichnet, dass** das untere Scharnierteil (5a) im Querschnitt S-förmig ausgebildet ist.

## Claims

1. Front end (1) of a vehicle, in particular motor vehicle, with two upper longitudinal members (2) which are arranged opposite each other, as seen in the transverse direction of the vehicle, and which, for their part, are in each case predominantly formed by an elongate box profile, and with a front flap which is supported pivotably on the longitudinal members (2) by means of front flap hinges (5) which are assigned to the upper longitudinal members (2) and which in turn each have an upper and a lower hinge part (5a, 5b), wherein the lower hinge part (5a) of each front flap hinge (5) projects through a recess (11) in an upper wall (6) of the box profile of the associated longitudinal member (2) into the cavity formed in the box profile, **characterized in that** the lower hinge part is supported and fastened indirectly via a profile element (12) to the inner contour of a side wall (8) of the box profile of the upper longitudinal member (2).

2. Front end (1) according to Claim 1, **characterized in that** the profile element (12) is fastened in an integrally bonded manner, in particular by means of welding, to the inner contour of the side wall (8) of the box profile.

3. Front end (1) according to Claim 1 or 2, **characterized in that** the profile element (12) is fastened to the inner contour of the box-profile side wall (8) closest to the centre of the vehicle.

4. Front end (1) according to one of Claims 1 to 3, **characterized in that** the profile element (12) is of cup-shaped design in cross section with protruding fastening flanges (13), wherein, for the releasable fastening of the lower hinge part (5a) of the front flap hinge (5), the profile base (15) of the profile element (12) has at least one through-bore (16) for receiving a mechanical fastening element, such a fastened screw.

5. Front end (1) according to Claim 4, **characterized in that** the at least one through-bore (16) is designed as an elongated hole, permitting height adjustability of the front flap hinge (5).

6. Front end (1) according to one of Claims 1 to 5, **characterized in that** the profile element (12) is designed as a shaped sheet-metal part.

7. Front end (1) according to one of Claims 1 to 6, **characterized in that** the recess (11) in the upper wall (6) of the box profile of the longitudinal member (2) is bounded by an encircling reinforcing flange (17) protruding towards the inside of the profile.

8. Front end (1) according to one of Claims 1 to 7, **characterized in that** the cross section of the lower hinge part (5a) has at least one predetermined buckling point (18) which makes it possible that, when there is an increased impact loading of the front flap from above as a consequence of a crash event, such as a collision with a pedestrian, the lower hinge part (5a) buckles in the transverse direction of the vehicle in a manner absorbing impact energy.

9. Front end (1) according to Claim 8, **characterized in that** the recess (11) in the upper wall (6) of the box profile of the upper longitudinal member (2) is dimensioned in such a manner that, when the buckling stress is increased further, the lower hinge part (5a) penetrates at least in sections into the recess (11) and/or is supported, in a manner absorbing further impact energy, on an edge region (19) of the recess (11), the edge region being designed to be flexible within limits.

10. Front end (1) according to one of Claims 1 to 9, **characterized in that** the lower hinge part (5a) is of S-shaped design in cross section.

## Revendications

1. Avant-train (1) d'un véhicule, en particulier d'un véhicule automobile, comprenant deux longerons supérieurs (2) disposés l'un en face de l'autre, vu dans la direction transversale du véhicule, qui de leur côté sont formés à chaque fois principalement par un profil de caisson allongé, et comprenant un capot, lequel capot est supporté de manière à pouvoir pivoter sur les longerons (2) au moyen de charnières de capot (5) associées aux longerons supérieurs (2), qui présentent à leur tour à chaque fois une partie de charnière supérieure et une partie de charnière inférieure (5a, 5b), la partie de charnière inférieure (5a) de chaque charnière de capot (5) pénétrant à travers un évidement (11) dans une paroi supérieure (6) du profil de caisson du longeron associé (2) dans la cavité formée du profil de caisson, **caractérisé en ce que** la partie de charnière inférieure est supportée et fixée par le biais d'un élément profilé (12) de manière indirecte au contour intérieur d'une paroi latérale (8) du profil de caisson du longeron supérieur (2).

2. Avant-train (1) selon la revendication 1, **caractérisé en ce que** l'élément profilé (12) est fixé par engagement par liaison de matière, en particulier par soudage, au contour intérieur de la paroi latérale (8) du profil de caisson.

3. Avant-train (1) selon la revendication 1 ou 2, **caractérisé en ce que** l'élément profilé (12) est fixé au contour intérieur de la paroi latérale (8) du profil de caisson situé le plus près du milieu du véhicule.

4. Avant-train (1) selon l'une quelconque des revendications 1 à 3, **caractérisé en ce que** l'élément profilé (12) est réalisé en section transversale en forme de pot avec des brides de fixation saillantes (13), le fond de profilé (15) de l'élément profilé (12) présentant, pour la fixation amovible de la partie de charnière inférieure (5a) de la charnière de capot (5), au moins un alésage traversant (16) pour recevoir un élément de fixation mécanique tel qu'une vis de fixation.

5. Avant-train (1) selon la revendication 4, **caractérisé en ce que** l'au moins un alésage traversant (16) fournissant une capacité d'ajustement en hauteur de la charnière de capot (5), est réalisé sous forme de trou oblong.

6. Avant-train (1) selon l'une quelconque des revendications 1 à 5, **caractérisé en ce que** l'élément profilé (12) est réalisé sous forme de pièce façonnée en tôle.

7. Avant-train (1) selon l'une quelconque des revendications 1 à 6, **caractérisé en ce que** l'évidement (11) dans la paroi supérieure (6) du profil de caisson du longeron (2) est limité par une bride de renforcement périphérique (17) faisant saillie vers l'intérieur du profil.

8. Avant-train (1) selon l'une quelconque des revendications 1 à 7, **caractérisé en ce que** la section transversale de la partie de charnière inférieure (5a) présente au moins un point d'inflexion de consigne (18) qui, en cas de sollicitation par choc importante du capot par le haut, suite à une collision, par exemple une collision avec un piéton, est prévu pour faire fléchir la partie de charnière inférieure (5a) en absorbant de l'énergie de choc dans la direction transversale du véhicule.

9. Avant-train (1) selon la revendication 8, **caractérisé en ce que** l'évidement (11) dans la paroi supérieure (6) du profil de caisson du longeron supérieur (2) est dimensionné de telle sorte que la partie de charnière inférieure (5a), en cas de sollicitation de flexion importante supplémentaire, pénètre dans l'évidement (11) au moins en partie et/ou s'appuie sur une région de bord (19) de l'évidement (11) réalisée de manière flexible dans certaines limites, en absorbant l'énergie de choc supplémentaire.

10. Avant-train (1) selon l'une quelconque des revendications 1 à 9, **caractérisé en ce que** la partie de charnière inférieure (5a) est réalisée en section transversale en forme de S.
